# EUROPEAN PATENT APPLICATION

(11) **EP 1 830 163 A1**
(43) Date of publication of application: **05.09.2007**
(21) Application number: 05806013.8
(22) Date of filing: 11.11.2005
(51) Int. Cl.: G01D 11/24, B60K 35/00, G01D 7/00

(54) **DISPLAY DEVICE**

(30) Priority: 29.11.2004 JP 2004343516; 07.02.2005 JP 2005030196
(71) Applicant: NIPPON SEIKI CO., LTD., Nagaoka-shi, Niigata 940-8580 (JP)
(72) Inventor: OOTAKI, Kazuya, (JP); SAHARA, Yuusuke, (JP); KOBAYASHI, Nobuaki, (JP)
(74) Representative: Jackson, Richard Eric
(86) International application number: PCT/JP2005/020696
(87) International publication number: WO 2006/057168

(57) **Abstract**

A display device 10 comprises a first display 11 arranged with a display surface (luminous display surface) 11a inclined to a direction E of line of sight of an observer to emit a first light L1 to form a first displayed image 21, a second display 12, which emits a second light L2 to form a second displayed image 22, and a transmission type reflecting panel (half mirror) 13'arranged between the first display 11 and the second display 12 to transmit the first light L1 toward the observer and to reflect the second light L2 toward the observer. Also, the first and second displays 11, 12 are arranged so that at least a part of a location of transmission of the first light L1 on the transmission type reflecting panel 13 overlaps a location of reflection of the second light L2.

## Description

### Technical Field

The present invention relates to a display device, which comprises a transmission type reflecting panel and makes virtual display and real display in combination.

### Background Art

Conventionally, there is known, as disclosed in, for example, Patent Documents 1 to 3, a display device, in which a transmission type reflecting panel called a half mirror is arranged forwardly (on a side of a display surface) of a luminous display, a further luminous display is arranged forwardly of the transmission type reflecting panel, light emitted from the luminous display is transmitted through the transmission type reflecting panel to display a real image, and light emitted from the further luminous display is reflected by the transmission type reflecting panel to display a virtual image.

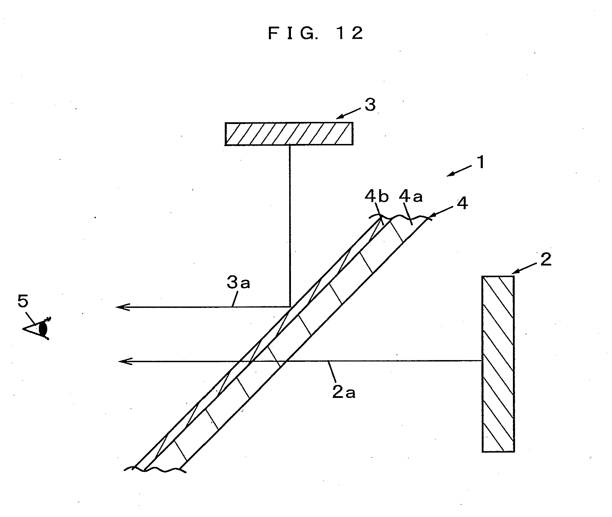

Fig. 12 shows a conventional example of the display device described above, the display device 1 comprising a luminous display 2 for real image, a luminous display 3 for virtual image, and a half mirror 4 arranged between the luminous display 2 for real image and the luminous display 3 for virtual image. The half mirror 4 is used to include a reflecting film 4b made of a glossy metal such as aluminum, etc., and coated on a surface (surface opposed to the luminous display 3 for virtual image) of a panel substrate 4a made of transparent, inorganic glass or synthetic resin by measures such as vapor deposition method, etc.

Light 2a emitted from the luminous display 2 for real image is incident upon the transparent panel substrate 4a to be transmitted toward an observer 5 through the reflecting film 4b. Thereby, the observer 5 can visually recognize a real image of a displayed image formed by the light 2a. Also, light 3a of the luminous display 3 for virtual image is favorably reflected toward the observer 5 by the reflecting film 4b whereby the observer 5 can visually recognize a virtual image of a displayed image formed by the light 3a.
Patent Document 1: JP-A-9-257523
Patent Document 2: JP-A-2002-114058
Patent Document 3: JP-A-2002-104019

### Disclosure of the Invention

### Problems that the Invention is to Solve

Such display device 1 displays in combination a real image by the luminous display 2 for real image and a virtual image by the luminous display 3 for virtual image whereby it is possible to obtain a three-dimensional display, which is visually recognized by the observer 5, for example, as if the virtual image were positioned forwardly of the real image.

However, such display device 1 enables obtaining only a three-dimensional feeling owing to a difference in range feeling between the real image and the virtual image but a feeling of depth cannot be obtained in display and so there is left room for a further improvement in a method of obtaining a three-dimensional feeling.

The invention has been thought of in view of the point described above and has its main object to provide a display device enabling obtaining a three-dimensional feeling having a depth in display and an improvement in quality of goods.

### Means for Solving the Problems

In order to solve the problem, a display device of the invention has a feature in comprising a first display arranged with a display surface inclined to a direction of line of sight of an observer to emit a first light to form a first displayed image, a second display, which emits a second light to form a second displayed image, and a transmission type reflecting panel arranged between the first display and the second display to transmit the first light toward the observer and to reflect the second light toward the observer.

Also, the invention has a feature in that the first and second displays are arranged so that at least a part of a location of transmission of the first light on the transmission type reflecting panel overlaps a location of reflection of the second light.

Also, the invention has a feature in that the first and second displays are arranged so that a virtual image of the second displayed image is positioned between that end of the display surface of the first display, which is near to the observer, and that end of the display surface, which is distant from the observer.

Also, the invention has a feature in that the first display is arranged so that the display surface is inclined upward to the direction of line of sight of the observer.

Also, the invention has a feature in that the first display is arranged so that an angle formed between the display surface and the direction of line of sight of the observer is not more.than 45 degrees.

Also, the invention has a feature in that the first display is arranged so that the display surface is inclined downward to the direction of line of sight of the observer.

Also, the invention has a feature in that the first display is arranged so that an angle formed between the display surface and the direction of line of sight of the observer is not more than 135 degrees.

Also, the invention has a feature in that at least one of the first and second displays comprises an organic EL panel including an organic EL element.

Also, the invention has a feature in that the first display displays a picture indicative of a road.

Also, the invention has a feature in that the second display displays a picture indicative of at least one of a vehicle, an object around a vehicle, vehicular information, warning information, and route guidance information.

Also, the invention has a feature in comprising a third display arranged to align with the first display and in that the first display is arranged so that at least a part of the display surface is positioned on a more distant side from the observer than a display surface of the third display.

Also, the invention has a feature in that the third display comprises an analog type display including a pointer, which turns on the display surface.

Also, the invention has a feature in comprising a fourth display arranged to align with the first and third displays and in that the first display is arranged so that at least a part of the display surface is positioned between the third display and the fourth display on a more distant side from the observer than display surfaces of the third and fourth displays.

Also, the invention has a feature in that at least one of the third and fourth displays comprises an analog type display including a pointer, which turns on the display surface.

Also, the invention has a feature in comprising an initial operation function of having the first and second displays successively displaying the first and second displayed images according to ON inputting of a power supply switch.

Also, the invention has a feature in comprising an initial operation function of having the first and second displays scroll-in displaying at least one of the first and second displayed images according to ON inputting of a power supply switch.

Also, the invention has a feature in that the initial operation function has the first and second displays scroll-in displaying the first and second displayed images in mutually different directions.

Also, the invention has a feature in comprising a terminating operation function of having the first and second displays successively non-displaying the first and second displayed images according to OFF inputting of a power supply switch.

Also, the invention has a feature in comprising a terminating operation function of having the first and second displays scrolling out at least one of the first and second displayed images according to OFF inputting of a power supply switch.

Also, the invention has a feature in that the terminating operation function has the first and second displays scrolling out the first and second displayed images in mutually different directions.

### Effect of the Invention

The invention relates to a display device, which comprises a transmission type reflecting panel and displays a virtual image and a real image in combination, and enables obtaining a deep, three-dimensional feeling in display and achieving an improvement in quality of goods.

### Brief Description of the Drawings

[Fig. 1] Fig. 1 is a cross sectional view showing a display device according to a first embodiment of the invention.
[Fig. 2] Fig. 2 is a front view showing the display device according to the embodiment.
[Fig. 3] Fig. 3 is a cross sectional view showing an essential part of the embodiment.
[Fig. 4] Fig. 4 is a time chart illustrating an initial operation of the embodiment.
[Fig. 5] Fig. 5 is a view illustrating the initial operation of the embodiment.
[Fig. 6] Fig. 6 is a view illustrating a further example of the initial operation of the embodiment.
[Fig. 7] Fig. 7 is a time chart illustrating a terminating operation of the embodiment.
[Fig. 8] Fig. 8 is a view illustrating the terminating operation of the embodiment.
[Fig. 9] Fig. 9 is a view illustrating a further example of the terminating operation of the embodiment.
[Fig. 10] Fig. 10 is a cross sectional view showing an essential part of a second embodiment of the invention.
[Fig. 11] Fig. 11 is a cross sectional view showing an essential part of a third embodiment of the invention.
[Fig. 12] Fig. 12 is a cross sectional view showing a conventional example of a display device.

### Description of Reference Numerals and Signs

1: display device
2: luminous display for real image
2a: light
3: luminous display for virtual image
3a: light
4: half mirror
4a: panel substrate
4b: reflecting film
5: observer
10: display device
11: first display
11a: luminous display surface (display surface)
12: second display
12a: luminous display surface (display surface)
13: half mirror (transmission type reflecting panel)
13a: panel substrate.
13b: reflecting film
14: third display
14a: pointer
14b: index portion
15: fourth display
15a: pointer
15b: index portion
16: display plate
21: first displayed image
22: second displayed image
23: third displayed image
23a: pointer displayed image
23b: index displayed image
24: fourth displayed image
24a: pointer displayed image
24b: index displayed image
E: direction of line of sight
L1: first light
L2: second light
R1: location of transmission
R2: location of reflection

### Best Mode for Carrying Out the Invention

Subsequently, a first embodiment, in which the invention is applied to a display device for vehicles, will be described with reference to the accompanying drawings . As shown in Figs . 1 and 2, a display device 10 mainly comprises a first display 11, a second display 12, a half mirror (transmission type reflecting panel) 13, a third display 14, and a fourth display 15.

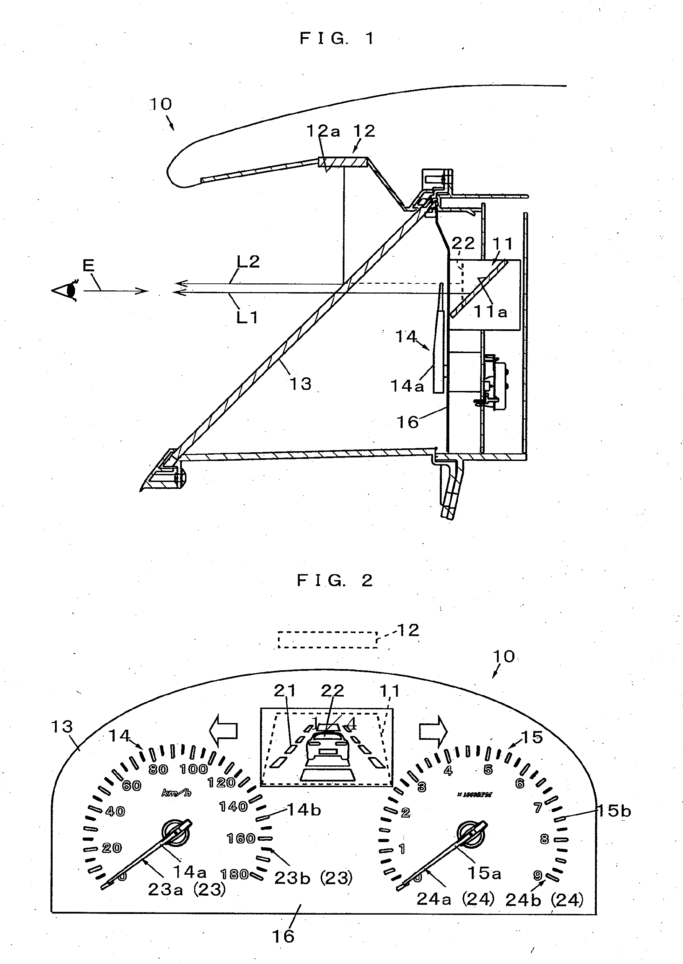

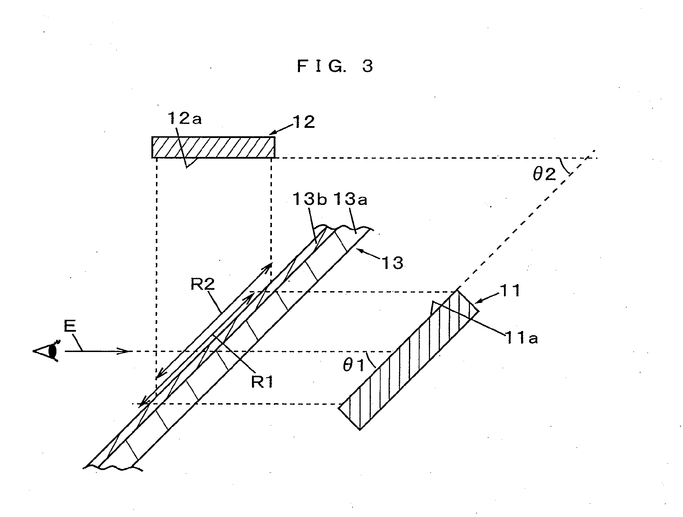

The first display 11 comprises a luminous display panel, of which a luminous display surface (display surface) 11a is opposed to a back surface (surface on a side of a panel substrate described later) of the half mirror 13 and which is arranged to align with the third and fourth displays 14, 15, the display panel comprising an organic EL panel, in which dot matrix type organic EL elements including a pair of electrodes interposing an organic layer having, for example, at least a luminous layer are formed on a glass substrate. Also, the first display 11 is arranged as shown in Fig. 2 to be positioned between the third display 14 and the fourth display 15 as viewed in a direction E of line of sight of an observer. Also, the first display 11 is arranged so that its luminous display surface 11a is positioned rearwardly of luminous display surfaces of the third and fourth displays 14, 15. By applying a direct current between the both electrodes, the first display 11 makes the organic EL elements, which make a light source, luminous to cause light to outgo from the luminous display surface 11a to form a first displayed image 21. The first displayed image 21 is formed by a first light L1, which outgoes from the luminous display surface 11a in a direction parallel to the direction E of line of sight to transmit through the half mirror 13 in the direction E of line of sight, and visually recognized as a real image by the observer, the first displayed image comprising a picture indicative of, for example, a road as shown in Fig. 2. In addition, the first displayed image 21 is optional in displayed configuration and may be otherwise an image in the form of a frame or an arrow. Also, the first display 11 is arranged so that the luminous display surface 11a is inclined upward to the direction E of line of sight. At this time, an angle θ1 formed between the luminous display surface 11a of the first display 11 and the direction E of line of sight becomes smaller than 90 degrees as shown in Fig. 3. Also, in order to make display sufficiently deep, the angle θ1 is preferably larger than 0 degree but not more than 45 degrees. Also, in the case where a luminous display surface (display surface) 12a of the second display 12 is arranged in parallel to the direction E of line of sight, an angle θ2 formed between the luminous display surface 11a of the first display 11 and the luminous display surface 12a of the second display 12 becomes likewise smaller than 90 degrees (desirably, not more than 45 degrees).

The second display 12 comprises a luminous display panel, of which a luminous display surface 12a is arranged to be in parallel to the direction E of line of sight and opposed to a surface (surface on a side of a reflecting film described later) of the half mirror 13, the display panel comprising an organic EL panel, in which dot matrix type organic EL elements including a pair of electrodes interposing an organic layer having, for example, at least a luminous layer are formed on a glass substrate. Also, the second display 12 is arranged in a position, which is forwardly (side toward the observer) of the half mirror 13 and not seen directly from the observer. By applying a direct current between the both electrodes, the second display 12 makes the organic EL elements, which make a light source, luminous to cause light to outgo from the luminous display surface 12a to form a second displayed image 22. The second displayed image 22 is formed by a second light L2, which outgoes from the luminous display surface 12a in a direction of a predetermined angle (45 degrees in the first embodiment) to the half mirror 13 and is reflected by the half mirror 13 in the direction E of line of sight, and visually recognized as a virtual image by the observer, the second displayed image comprising a picture indicative of, for example, a vehicle as shown in Fig. 2. In addition, the second displayed image 22 is optional in displayed configuration and may be otherwise an image indicative of any one of an object around a vehicle, such as a vehicle going ahead, a vehicle going behind, an obstacle, a building, pedestrians, etc., vehicular information such as vehicle speed, engine speed, travel distance, etc., warning information, and route guidance information. Also, the second display 12 is preferably arranged by regulating a distance of the luminous display surface 12a to the half mirror 13 whereby a virtual image of the second displayed image 22 is displayed to be positioned between that end (a lower end in the first embodiment) of the luminous display surface 11a of the first display 11, which is near to the observer, and that end (an upper end in the first embodiment) of the luminous display surface 11a, which is away from the observer. That is, the virtual image of the second displayed image 22 is preferably displayed above the luminous display surface 11a, or in a position intersecting the luminous display surface 11a.

The half mirror 13 is a semi-transmission type reflecting member, which permits light parallel to the direction E of line of sight of the observer to transmit therethrough and reflects light inclined to the direction E of line of sight. As shown in detail in Fig. 3, the half mirror 13 includes a sheet-shaped panel substrate 13a made of inorganic glass mixed with dye (pigment) of a dark color, for example, black, or the like, and a reflecting film 13b formed on a surface (an outside surface opposed to the luminous display surface 12a of the second display 12) of the panel substrate 13a by measures such as vapor deposition method, etc. and made of a glossy, metallic material such as aluminum (Al), etc., and is arranged at an inclination of 45 degrees to, for example, the second display 12 and the direction E of line of sight so as to cover the luminous display surface 11a of the first display 11 with the reflecting film 13b opposed to the luminous display surface 12a of the second display 12.

The third and fourth displays 14, 15 comprise an analog type display opposed to the back surface of the half mirror 13 and arranged to align with the first display 11 as viewed in the direction E of line of sight, the third display 14 displaying a vehicle speed as a measurement, and the fourth display 15 displaying an engine speed of a vehicle as a measurement. The third and fourth displays 14, 15 comprise pointers 14a, 15a rotated by a drive device, such as a stepping motor, etc., which rotates a rotating shaft, index portions 14b, 15b comprising a plurality of graduations, numerals, figures, etc., which are formed arcuately on a display plate 16 arranged behind the pointers 14a, 15a and make objects of indication of the pointers 14a, 15a, and a plurality of light sources (not shown) comprising LED, etc. for illumination of the pointers 14a, 15a and the index portions 14b, 15b.

When the respective light sources are lighted, the third and fourth displays 14, 15, respectively, form third and fourth displayed images 23, 24 composed of pointer displayed images 23a, 24a indicative of the pointers 14a, 15a and index displayed images 23b,-24b indicative of the index portions 14b, 15b as shown in Fig. 2. The third and fourth displayed images 23, 24 are formed by third and fourth lights (not shown), which outgo from luminous display surfaces of the pointers 14a, 15a and the index portions 14b, 15b in a direction parallel to the direction E of line of sight to transmit through the half mirror 13 in the direction E of line of sight, and visually recognized as real images by the observer. In addition, the pointers 14a, 15a are made of a transparent synthetic resin material, which can be made luminous by light from the light source, and a shading synthetic resin material, and the transparent synthetic resin material exposed from the shading synthetic resin material becomes partially luminous to form the pointer displayed images 23a, 24a. Also, the display plate 16 is formed with respective printed layers, which comprise shading ink and light transmission ink, the printed layer comprising the light transmission ink forms the index portions 14b, 15b, and light transmitting through the index portions 14b, 15b forms the index displayed images 23b, 24b.

With the display device 10, when, for example, a power supply switch (not shown) (a key switch or an ignition switch) mounted on a vehicle is made OFF, the half mirror 13 itself is visually recognized in dark color (non-displayed state), and when the power supply switch is made ON, the first, second, third, and fourth displays 11, 12, 14, 15 go through initial operations described later to luminously display the first, second, third, and fourth displayed images 21, 22, 23, 24. Thereby, the first, third, and fourth displayed images 21, 23, 24, which comprise a real image, and the second displayed image 22, which comprises a virtual image, are displayed in combination on the half mirror 13 as shown in Fig. 2. The observer visually recognizes such displayed configuration such that the first and second displayed images 21, 22 are positioned rearwardly of the third and fourth displayed images 23, 24 since the luminous display surface 11a of the first display 11 and the virtual image of the second displayed image 22 are arranged so as to be positioned rearwardly of the luminous display surfaces of the third and fourth displays 14, 15, and so display can be given a three-dimensional feeling according to a combination of the respective displayed images 21 to 24. In addition, the respective displayed images 21 to 24 may be selectively displayed according to an operated position of the power supply switch or switchover of a switch as separately provided.

Also, the first display 11 is arranged to incline upward to the direction E of line of sight of the observer whereby the first displayed image 21, which has a feeling of depth and is displayed from a lower end of the luminous display surface 11a toward an upper end thereof, and the second displayed image 22, which is virtually displayed above the luminous display surface 11a, or in a position intersecting the luminous display surface 11a to be visually recognized as if it floated on the first displayed image 21, are displayed overlapping each other, thereby enabling giving display a deep, three-dimensional feeling. In addition, in order to overlappingly display the first and second displayed images 21, 22, the first and second displays 11, 12 are arranged so that at least a part of a location R1 of transmission of the first light L1 on the half mirror 13 overlaps a location R2 of reflection of the second light L2. In that display, in which the first and second displayed images 21, 22 are combined together, that display, in which the second displayed image 22 is visually recognized as if it moved in a depth direction along the first displayed image 21, can be obtained by moving the second displayed image 22, which is virtually displayed, in a displayed position in a direction of inclination of the luminous display surface 11a of the first display while gradually contracting or enlarging it. In the first embodiment, since the luminous display surface 11a of the first display 11 is inclined upward (vertically) to the direction E of line of sight of the observer, that display, in which the second displayed image 22 is visually recognized as if it moved away from the observer along the first displayed image 21, which is deep, is obtained by gradually contractedly displaying the second displayed image 22 as a displayed position thereof is moved to a position, which is distant from the observer and overlaps the upper end of the luminous display surface 11a, from a position, which is near to the observer and overlaps the lower end of the luminous display surface 11a. Also, that display, in which the second displayed image 22 moves along the first displayed image 21, which is deep, while approaching the observer, is obtained by gradually enlarginglydisplaying the second displayed image 22 as a displayed position thereof is moved to a position, which is near to the observer and overlaps the lower end of the luminous display surface 11a, from a position, which is distant from the observer and overlaps the upper end of the luminous display surface 11a.

Also, the display device 10 has an initial operation function of having the respective displays 11, 12, 14, 15 performing a predetermined, initial operation, which is different from a display operation at the regular time, according to ON inputting of the power supply switch, and a terminating operation function of having the respective displays 11, 12, 14, 15 performing a predetermined, terminating operation, which is different from a display operation at the regular time, according to OFF inputting of the power supply switch.

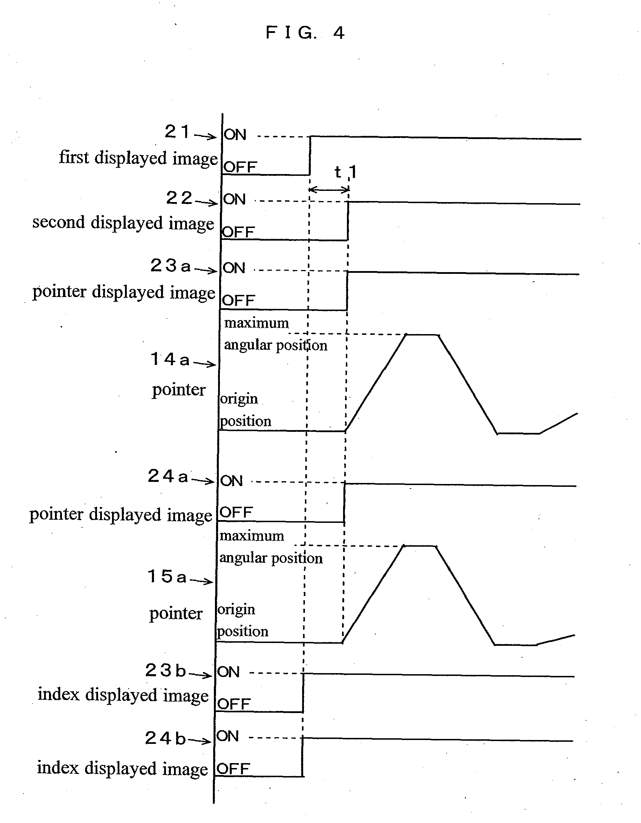

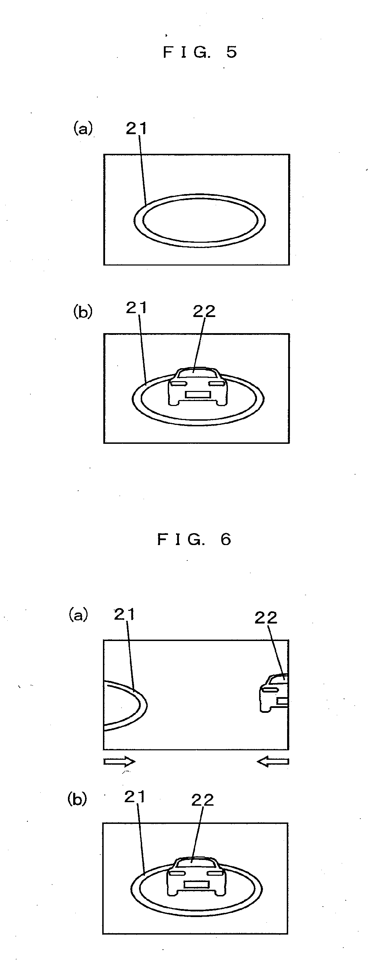

Fig. 4 is a view illustrating a time chart in the initial operation. Control means (not shown) composed of a microcomputer, etc. and provided on the display device 10 has a detection signal representative of a state of the power supply switch input thereinto, and when shift (ON inputting of the power supply switch) to an ON state of the power supply switch is detected, the first display 11 is caused to first display the first displayed image 21 (see Fig. 5(a)) and the second display 12 is caused to further display the second displayed image 22 after the lapse of time t1 since display of the first displayed image 21 (see Fig. 5 (b)). In addition, at the time of the initial operation, a frame-shaped mark is displayed as the first displayed image 21 as shown in Fig. 5 and a picture indicative of a vehicle is displayed as the second displayed image 22. Also, in the initial operation, the control means causes the third and fourth displays 14, 15 to display the index displayed images 23b, 24b indicative of the index portions 14b, 15b in synchronism with display of the first displayed image 21 and to display the pointer displayed images 23a, 24a indicative of the pointers 14a, 15a in synchronism with display of the second displayed image 22 after the lapse of time t1, and causes the pointers 14a, 15a to start turning motions in the range from an origin position to a maximum angular position.

In addition, the first and second displays 11, 12 may be caused in the initial operation to perform a scroll-in display, in which at least one of the first and second displayed images 21, 22 is gradually moved into a display range from outside the display range. Fig. 6 shows an example of display in the case where the first and second displayed images are scroll-in displayed in the initial operation, and the first and second displays 11, 12 are caused to scroll-in display the first and second displayed images 21, 22 in mutually different directions. Also, display by and turning motions of the third and fourth displays 14, 15 may be made with a predetermined time difference from display of the first and second displayed images 21, 22.

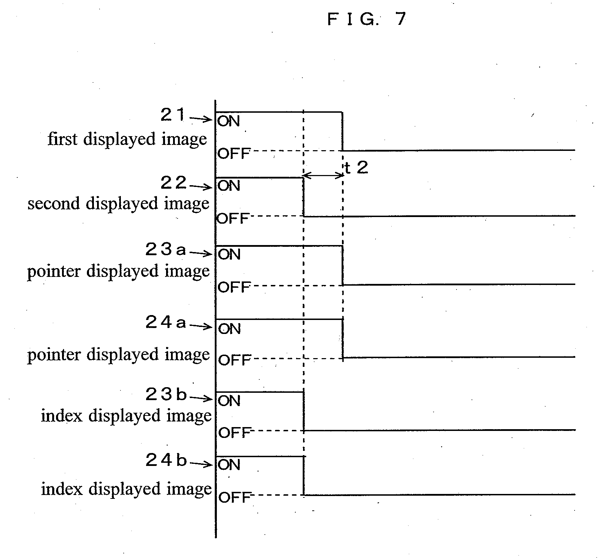

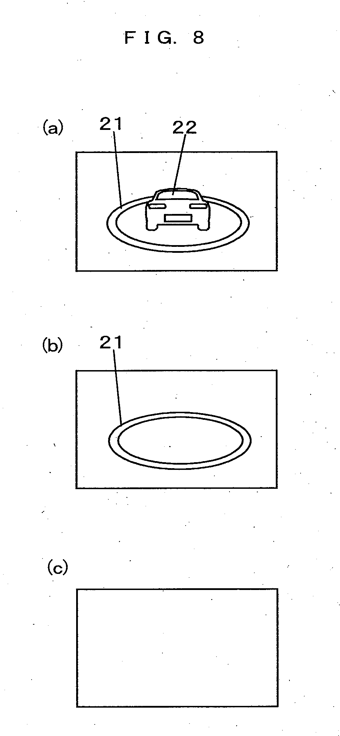

Fig. 7 is a view illustrating a time chart in the terminating operation. The control means has a detection signal representative of a state of the power supply switch input thereinto, and when shift (OFF inputting of the power supply switch) to an OFF state of the power supply switch is detected, the second display 12 is caused not to first display the second displayed image 22 (see Fig. 8(b)) from a state, in which the first and second displayed images 21, 22 are displayed (see Fig. 8(a)), and the first display 11 is caused not to display the first displayed image 21 after the lapse of time t2 since non-display of the second displayed image 22 (see Fig. 8 (c)). In addition, at the time of the terminating operation, a frame-shaped mark is displayed as the first displayed image 21 as shown in Fig. 8 and a picture indicative of a vehicle is displayed as the second displayed image 22. Also, in the terminating operation, the control means causes the third and fourth displays 14, 15 not to display the index displayed images 23b, 24b indicative of the index portions 14b, 15b in synchronism with non-display of the second displayed image 22 and not to display the pointer displayed images 23a, 24a indicative of the pointers 14a, 15a after the lapse of time t2 in synchronism with non-display of the first displayed image 21.

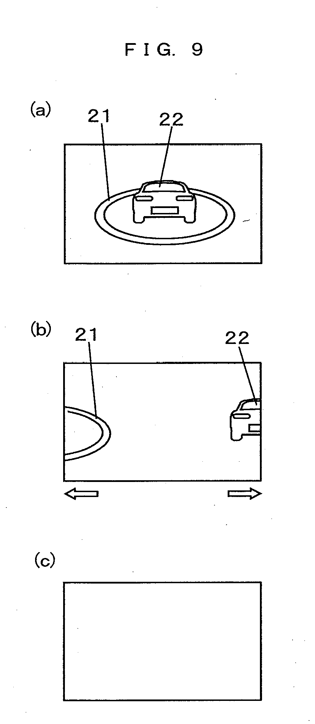

In addition, the first and second displays 11, 12 may be caused in the terminating operation not to display by scroll-out, in which at least one of the first and second displayed images 21, 22 is gradually moved outside a display range from within the display range. Fig. 9 shows an example of display, in which the first and second displayed images 21, 22 are caused in the terminating operation to perform scroll-out, and the first and second displays 11, 12 are caused not to display the first and second displayed images 21, 22 by scroll-out in mutually different directions. Also, non-display by the third and fourth displays 14, 15 may be made with a predetermined time difference from non-display of the first and second displayed images 21, 22.

The display device 10 according to the first embodiment includes the first display 11 arranged with the luminous display surface 11a inclined to the direction E of line of sight of the observer to emit the first light L1 for formation of the first displayed image 21, the second display 12, which emits the second light L2 for formation of the second displayed image 22, and the half mirror 13 arranged between the first display 11 and the second display 12 to permit the first light L1 to transmit in the direction E of line of sight of the observer and to reflect the second light L2 in the direction E of line of sight of the observer. Also, the first and second displays 11, 12 are arranged so that at least a part of the location R1 of transmission of the first light L1 on the half mirror 13 overlaps the location R2 of reflection of the second light L2. Also, the first and second displays 11, 12 are arranged so that a virtual image of the second displayed image 22 is positioned between that end of the luminous display surface 11a of the first display 11, which is near to the observer, and that end of the luminous display surface 11a, which is away from the observer. Also, the first display 11 is arranged so that the luminous display surface 11a is inclined upward to the direction E of line of sight of the observer. Also, the first display 11 displays a picture indicative of a road as the first displayed image 21. Also, the second display 12 displays, as the second displayed image 22, an image indicative of at least one of a vehicle, an object around a vehicle, vehicular information, warning information, and route guidance information.

With the construction, the first display 11 is arranged to incline to the direction E of line of sight of the observer whereby the first displayed image 21, in which display having a feeling of depth is made, and the second displayed image 22, which is virtually displayed to be visually recognized thereby as if it floated on the first displayed image 21, are displayed overlapping each other, so that the display device 10 enables giving display a deep, three-dimensional feeling and a novel display, thus enabling an improvement in quality of goods as a display device.

Also, a sufficient feeling of depth can be given to the first displayed image 21 by arranging the first display 11 so that an angle θ1 formed between the luminous display surface 11a and the luminous display surface 12a of the second display 12 becomes not more than 45 degrees. Also, by using an organic EL panel including an organic EL element, which comprises a self-light emitting diode having a wide angle of visibility, as the first display 11 arranged to incline to the direction E of line of sight of the observer, it is possible to favorably display the first displayed image 21 even in case of inclined arrangement. Also, by using an organic EL panel including an organic EL element, which is high in display contrast, as the second display 22, in which the second displayed image 22 is virtually displayed, it is possible to clearly display the second displayed image 22.

Also, the display device 10 includes the third and fourth displays 14, 15 arranged to align with the first display 11, and the first display 11 is arranged so that at least a part of the luminous display surface 11a is positioned rearwardly of the luminous display surfaces of the third and fourth displays 14, 15. Accordingly, since the first displayed image 21 is visually recognized by the observer to be positioned rearwardly of the third and fourth displayed images 23, 24, a three-dimensional feeling can be given to display by a combination of the respective displayed images 21 to 24.

Also, the display device 10 has the initial operation function of having the first and second displays 11, 12 successively displaying the first and second displayed images 21, 22 according to ON inputting of the power supply switch and of having the first and second displays 11, 12 scroll-in displaying at least one of the first and second displayed images 21, 22. Accordingly, it is possible to make a novel display representation making use of display having a depth on the basis of ON of the power supply switch, thus enabling an improvement in quality of goods as a display device.

Also, the display device 10 has the terminating operation function of having the first and second displays 11, 12 successively non-displaying the first and second displayed images 21, 22 according to OFF inputting of the power supply switch, or of having the first and second displays 11, 12 scroll-out displaying at least one of the first and second displayed images 21, 22. Accordingly, it is possible to make a novel display representation making use of display having a depth on the basis of OFF of the power supply switch, thus enabling an improvement in quality of goods as a display device.

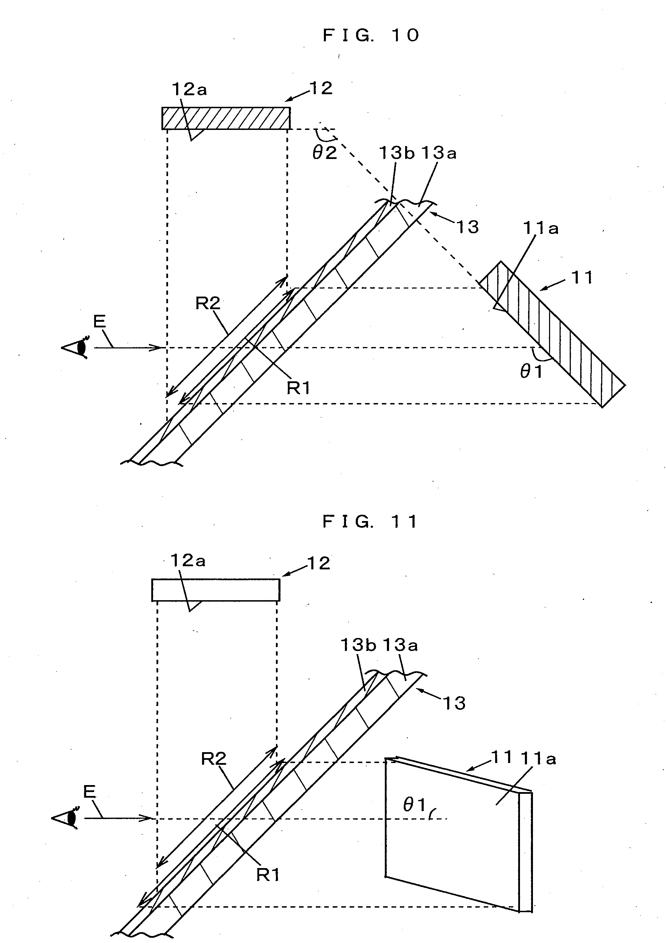

In addition, while the first display 11 in the embodiment is arranged to incline upward to the direction E of line of sight of the observer, a direction, in which the first display 11 inclines, is not limited to upward to the direction E of line of sight. Downward to the direction E of line of sight as shown in Fig. 10, or transverse to the direction E of line of sight as shown in Fig. 11 will do.

Fig. 10 shows a second embodiment of the invention. In addition, locations being the'same as, or corresponding to those in the first embodiment are denoted by the same reference numerals, and a detailed explanation therefor is omitted.

According to the second embodiment, a first display 11 is arranged so that its luminous display surface 11a inclines downward to a direction E of line of sight of the observer. At this time, an angle θ1 formed between the luminous display surface 11a of the first display 11 and the direction E of line of sight becomes larger than 90 degrees as shown in Fig. 10. Also, in order to provide display with a sufficient depth, the angle θ1 is preferably not less than 135 degrees but less than 180 degrees. Also, in the case where the luminous display surface 12a of the second display 12 is arranged in parallel to the direction E of line of sight, the angle θ2 formed between the luminous display surface 11a of the first display 11 and the luminous display surface 12a of the second display 12 also becomes larger than 90 degrees (desirably, not less than 135 degrees) likewise. In addition, the second display 12 is preferably arranged with a distance of the luminous display surface 12a to the half mirror 13 regulated whereby a virtual image of the second displayed image 22 is displayed to be positioned between that end (an upper end in the second embodiment) of the luminous display surface 11a of the first display 11, which is near to the observer, and that end (a lower end in the second embodiment) of the luminous display surface 11a, which is away from the observer. That is, a virtual image of the second displayed image 22 is preferably displayed below the luminous display surface 11a, or in a position intersecting the luminous display surface 11a.

The first display 11 is arranged to incline downward to the direction E of line of sight of the observer whereby the first displayed image 21, which has a feeling of depth and is displayed downward from above the luminous display surface 11a, and the second displayed image 22, which is virtually displayed below the luminous display surface 11a, or in a position intersecting the luminous display surface 11a to be visually recognized as if it floated below the first displayed image 21, are displayed overlapping each other, thereby enabling such configuration to give display a deep, three-dimensional feeling. In addition, in order to overlappingly display the first and second displayed images 21, 22, the first and second displays 11, 12 are arranged so that at least a part of a location R1 of transmission of the first light L1 on the half mirror 13 overlaps a location R2 of reflection of the second light L2. Also, since the luminous display surface 11a of the first display 11 in the second embodiment is inclined downward (vertically) to the direction E of line of sight of the observer, that display, in which the second displayed image 22 is visually recognized to move along the first displayed image 21, which is deep, while becoming more distant from the observer, is obtained by gradually contractedly displaying the second displayed image 22 as a displayed position thereof is moved to a position, which is distant from the observer and overlaps the lower end of the luminous display surface 11a, from a position, which is near to the observer and overlaps the upper end of the luminous display surface 11a. Also, that display, in which the second displayed image 22 is visually recognized to move along the first displayed image 21, which is deep, while approaching the observer, is obtained by gradually enlargingly displaying the second displayed image 22 as a displayed position thereof is moved to a position, which is near to the observer and overlaps the upper end of the luminous display surface 11a, from a position, which is distant from the observer and overlaps the lower end of the luminous display surface 11a.

Fig. 11 shows a third embodiment of the invention. In addition, locations being the same as, or corresponding to those in the first embodiment are denoted by the same reference numerals, and a detailed explanation therefor is omitted.

According to the third embodiment, a first display 11 is arranged so that its luminous display surface 11a inclines laterally to a direction E of line of sight of the observer. At this time, an angle θ1 formed between the luminous display surface 11a of the first display 11 and the direction E of line of sight becomes less than 90 degrees as shown in Fig. 11. Also, in order to provide display with a sufficient depth, the angle θ1 is preferably larger than 0 degrees but not more than 45 degrees. In addition, a second display 12 is preferably arranged with a distance of a luminous display surface 12a to a half mirror 13 regulated whereby a virtual image of a second displayed image 22 is displayed to be positioned between that end (a left end as viewed from the observer in the third embodiment) of the luminous display surface 11a of the first display 11, which is near to the observer, and that end (a right end as viewed from the observer in the third embodiment) of the luminous display surface 11a, which is away from the observer. That is, a virtual image of the second displayed image 22 is preferably displayed laterally of the luminous display surface 11a, or in a position intersecting the luminous display surface 11a.

The first display 11 is arranged to incline laterally to the direction E of line of sight of the observer whereby the first displayed image 21, in which display having a feeling of depth laterally is made, and the second displayed image 22, which is virtually displayed laterally of the luminous display surface 11a, or in a position intersecting the luminous display surface 11a to be visually recognized as if it floated laterally of the first displayed image 21, are displayed overlapping each other, thereby enabling such displayed configuration to give display a deep, three-dimensional feeling. In addition, in order to overlappingly display the first and second displayed images 21, 22, the first and second displays 11, 12 are arranged so that at least a part of a location R1 of transmission of the first light L1 on the half mirror 13 overlaps a location R2 of reflection of the second light L2. Also, since the luminous display surface 11a of the first display 11 in the third embodiment is inclined laterally (transverse direction) to the direction E of line of sight of the observer, that display, in which the second displayed image 22 is visually recognized to move along the first displayed image 21, which is deep, while becoming more distant from the observer, is obtained by gradually contractedly displaying the second displayed image 22 as a displayed position thereof is moved to a position, which is distant from the observer and overlaps the right end of the luminous display surface 11a, from a position, which is near to the observer and overlaps the left end of the luminous display surface 11a. Also, that display, in which the second displayed image 22 is visually recognized to move along the first displayed image 21, which is deep, while approaching the observer, is obtained by gradually enlargingly displaying the second displayed image 22 as a displayed position thereof is moved to a position, which is near to the observer and overlaps the left end of the luminous display surface 11a, from a position, which is distant from the observer and overlaps the right end of the luminous display surface 11a.

### Industrial Applicability

The invention is applied to a display device, which comprises a transmission type reflecting panel and makes virtual display and real display in combination.

## Claims

1. A display device **characterized by** comprising a first display arranged with a display surface inclined to a direction of line of sight of an observer to emit a first light to form a first displayed image, a second display, which emits a second light to form a second displayed image, and a transmission type reflecting panel arranged between the first display and the second display to transmit the first light toward the observer and to reflect the second light toward the observer.

2. The display device according to claim 1, **characterized in that** the first and second displays are arranged so that at least a part of a location of transmission of the first light on the transmission type reflecting panel overlaps a location of reflection of the second light.

3. The display device according to claim 2, **characterized in that** the first and second displays are arranged so that a virtual image of the second displayed image is positioned between that end of the display surface of the first display, which is near to the observer, and that end of the display surface, which is distant from the observer.

4. The display device according to claim 1, **characterized in that** the first display is arranged so that the display surface is inclined upward to the direction of line of sight of the observer.

5. The display device according to claim 4, **characterized in that** the first display is arranged so that an angle formed between the display surface and the direction of line of sight of the observer is not more than 45 degrees.

6. The display device according to claim 1, **characterized in that** the first display is arranged so that the display surface is inclined downward to the direction of line of sight of the observer.

7. The display device according to claim 6, **characterized in that** the first display is arranged so that an angle formed between the display surface and the direction of line of sight of the observer is not less than 135 degrees.

8. The display device according to claim 1, **characterized in that** at least one of the first and second displays comprises an organic EL panel including an organic EL element.

9. The display device according to claim 1, **characterized in that** the first display displays a picture indicative of a road.

10. The display device according to claim 1, **characterized in that** the second display displays a picture indicative of at least one of a vehicle, an object around a vehicle, vehicular information, warning information, and route guidance information.

11. The display device according to claim 1, **characterized by** further comprising a third display arranged to align with the first display, the first display being arranged so that at least a part of the display surface is positioned on a more distant side from the observer than a display surface of the third display.

12. The display device according to claim 11, **characterized in that** the third display comprises an analog type display including a pointer, which turns on the display surface.

13. The display device according to claim 11, **characterized by** further comprising a fourth display arranged to align with the first and third displays, the first display being arranged so that at least a part of the display surface is positioned between the third display and the fourth display on a more distant side from the observer than display surfaces of the third and fourth displays.

14. The display device according to claim 13, **characterized in that** at least one of the third and fourth displays comprises an analog type display including a pointer, which turns on the display surface.

15. The display device according to claim 1, **characterized by** further comprising an initial operation function of having the first and second displays successively displaying the first and second displayed images according to ON inputting of a power supply switch.

16. The display device according to claim 1, **characterized by** further comprising an initial operation function of having the first and second displays scroll-in displaying at least one of the first and second displayed images according to ON inputting of a power supply switch.

17. The display device according to claim 16, **characterized in that** the initial operation function has the first and second displays scroll-in displaying the first and second displayed images in mutually different directions.

18. The display device according to claim 1, **characterized by** further comprising a terminating operation function of having the first and second displays successively non-displaying the first and second displayed images according to OFF inputting of a power supply switch.

19. The display device according to claim 1, **characterized by** further comprising a terminating operation function of having the first and second displays scrolling out at least one of the first and second displayed images according to OFF inputting of a power supply switch.

20. The display device according to claim 19, **characterized in that** the terminating operation function has the first and second displays scrolling out the first and second displayed images in mutually different directions.
